# EUROPEAN PATENT SPECIFICATION

(11) **EP 1 048 862 B1**
(45) Date of publication and mention of the grant of the patent: **15.08.2012**
(21) Application number: 00303515.1
(22) Date of filing: 26.04.2000
(51) Int. Cl.: F16C 32/06, F01M 1/16, F01M 1/06, F01D 25/20, F02C 7/26, F01D 19/00

(54) **Combined lift and hydraulic fluid supply system in a gas turbine and method therefor**
System zur Zuführung eines hydraulischen Fluids in einer Gasturbine sowie Verfahren hierfür
Système et procédé d'approvisionnement d'un fluide hydraulique dans une turbine à gaz

(30) Priority: 26.04.1999 US 299272
(43) Date of publication of application: 02.11.2000
(73) Proprietor: GENERAL ELECTRIC COMPANY, Schenectady, NY 12345 (US)
(72) Inventor: Junquera, Steven Patrick, Scotia, New York 12302 (US)
(74) Representative: Illingworth-Law, William Illingworth

(56) References cited:
- US-A- 3 998 052
- US-A- 4 062 185
- US-A- 5 394 696

## Description

The present invention relates to systems for high pressure lift for turbine start-up and medium pressure hydraulics for turbine operational control. More particularly, the invention relates to a system for supplying hydraulic fluid for both lift and hydraulic systems of a gas turbine. One such arrangement is shown in US-A-4 062 185

Lift and hydraulic systems are both required during gas turbine start-up. The lift system provides high pressure oil to assist the turning gear in getting the shafting to roll and in establishing the required lubrication film to prevent bearing rubs. The hydraulic system is required during turbine start-up to position the inlet guide vanes and the gas valves.

US-A-3 998 052 discloses a hydraulic arrangement for turning the rotor shaft of a turbine rotor. The arrangement includes a variable speed hydraulic motor, the torque produced thereby being dependent upon the pressure of motive fluid supplied therethrough. A plurality of sources of motive fluid each at a predetermined pressure range are connected to the motor. A first fluid source has a pump to provide fluid at a first pressure (3000 p.s.i. maximum), a second supply branch has a pump to provide fluid at a second pressure (600 to 1500 p.s.i.), a third supply branch has a pump to provide fluid at a third pressure (80 to 150 p.s.i.) and a fourth supply branch has a pump to provide fluid at a fourth pressure (25 to 30 p.s.i.). Each source supplies the header 60 adjacent the hydraulic motor via a check valve which checks that branch out of the charging stream. The second source of fluid (600 to 1500 p.s.i.) may have fluid tapped for a supply conduit of a bearing lift system.

Conventionally, both of these systems include complicated manifolds, oil filtration units, and variable volume pumps. Moreover, the standard lift oil system offers no redundancy. Thus, if the pump fails to operate, the gas turbine cannot start up. It has, therefore, been proposed to provide a backup lift oil pump. If a second lift oil pump is provided, however, it must be added to the conventional lift oil system as an option. This leads to significant product variability and the second pump is difficult to install due to limited deckspace availability.

The invention is embodied in a system that uses a single hydraulic pump to provide the fluid, e.g. oil, for the dual functions of high pressure lift for turbine start-up and medium pressure hydraulics for turbine operational control. By providing lift oil and hydraulic oil from a single system, overall system complexity is minimized. Moreover, in the presently preferred embodiments a second hydraulic pump is provided as a back up to both lift and hydraulic requirements for full system redundancy and reliability. This redundant source of lift oil is provided in the presently preferred embodiments without increasing overall system complexity nor required deckspace, as compared to prior systems.

Thus, in accordance with an embodiment of the invention a combined lift and hydraulic fluid supply system for a gas turbine is provided that includes a first pump for receiving hydraulic fluid from a lubricating fluid system and selectively supplying hydraulic fluid at a first pressure sufficiently high for lift system requirements for a gas turbine, a valve for selectively supplying hydraulic fluid at the first pressure to a lift system for a gas turbine, a first fluid flow line for conducting hydraulic fluid from the first pump to the lift system valve, a second flow line in flow communication with the first flow line for receiving at least portion of the fluid pumped by the first pump for supply to the hydraulic system of the gas turbine, and a first pressure regulating valve in the second flow line for' reducing the pressure of the fluid flowing therethrough from the first pressure to a lower, second pressure for gas turbine hydraulic system requirements.

In accordance with a preferred embodiment of the invention, the combined lift/hydraulic system also has a second pump for selectively receiving hydraulic fluid from the lubricating fluid system and selectively supplying hydraulic fluid at the first pressure, a third fluid flow line for conducting hydraulic fluid from the second pump to the lift system valve, a fourth flow line for receiving at least portion of the fluid pumped by the second pump for supply to the hydraulic system of the gas turbine, and an inlet valve for selectively directing fluid from the lubricating fluid system to at least one of the first and second pumps.

In a preferred embodiment of the invention, furthermore, the first pump, and second pump when provided, is a dual compensated variable volume pump and the system provides for feedback control of the pump(s) in accordance with lift system requirements.

The invention is further embodied in a method for supplying lift and hydraulic fluid for a gas turbine that includes pumping hydraulic fluid with a first pump at a first pressure, sufficiently high for lift system requirements for a gas turbine, through a first flow line; selectively supplying hydraulic fluid at the first pressure from the first flow line to the lift system of a gas turbine through a first valve; directing at least portion of the fluid pumped by the first pump from the first flow line into a second flow line for supply to the hydraulic system of the gas turbine; and reducing the pressure of the fluid flowing through the second flow line from the first pressure to a lower, second pressure for gas turbine hydraulic system requirements.

The invention will now be described in greater detail, by way of example, with reference to the drawings, in which:-
FIGURE 1 is a schematic representation of a combined lift/hydraulic system embodying the present invention;
FIGURE 2 is a schematic representation of a combined lift/hydraulic system with dual compensated pumps and pilot valve feedback; and
FIGURE 3 is a schematic representation of a combined lift/hydraulic system with dual compensated pumps and shuttle valve feedback.

The combined lift/hydraulic system embodying the invention is designed to simultaneously provide both high pressure lift oil requirements and medium pressure hydraulic oil requirements from a single variable volume pump. As will be apparent from a consideration of the system embodiments disclosed hereinbelow, the overall combined system is much less complex than that which currently exists by virtue of separate lift oil and hydraulic oil systems. Moreover, the presently preferred embodiments of the combined system provide additional lift oil capability (redundancy) without the use of an add-on pump. By incorporating redundancy in the system, there is reduced product variability, reduced system complexity, and increased system functionality with an overall reduction in required deckspace for the combined system. This has been accomplished in an exemplary embodiment by utilizing two of the conventional system lift oil pumps and a slightly larger electric motor, suitable to ,meet the additional oil demand. The hydraulic pumps of the prior art system have been eliminated through the use of a pressure regulator valve to reduce the high pressure lift oil pump discharge to the hydraulic system pressure requirements.

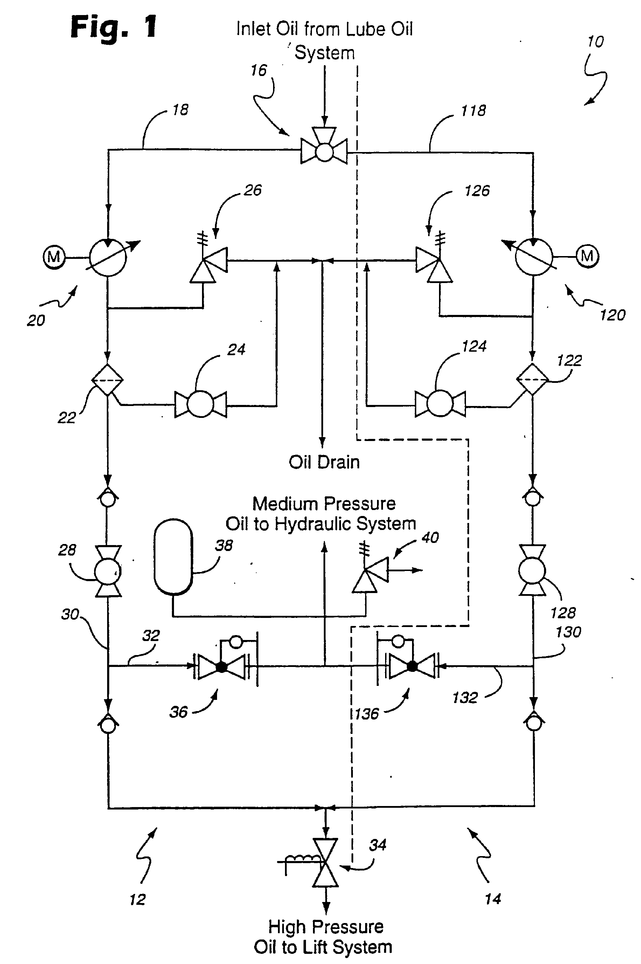

Turning now to FIGURE 1, a combined lifth/hydraulic oil supply system 10 embodying the invention is schematically illustrated. As illustrated, the combined lift/hydraulic system provides for 100% redundancy. For convenience and ease of description, reference will be made herein primarily to the flow lines and components depicted to the left in the schematic representation of FIGURE 1, as the main or primary system 12, whereas the flow lines and components depicted on the right in this schematic representation will be referred to as the redundant or backup system 14. For ease of correlation, parts of the redundant system that correspond to those in the main system 12 are identified with corresponding reference numerals.

Inlet oil from the lube oil system (not shown in detail) enters the combined lift/hydraulic system through inlet transfer valve 16, which directs the oil to the main system 12 and/or redundant system 14. Assuming the inlet transfer valve 16 is disposed for directing inlet oil into the main system 12, the oil flows through line 18 to variable volume pump 20. Pump 20 is a 100% capacity variable volume pump, e.g. 21 GPM minimum @ 351.6kg/cm² (5000psi). By 100% capacity what is meant is that the pump is 100% capable of providing both lift oil and hydraulic oil requirements during start-up or shutdown, and 100% of hydraulic requirements during normal steady-state turbine operation.

An oil filter 22 is provided downstream from variable volume pump 20. Filter 22 is a 100% capacity in-line full flow filtration unit meeting hydraulic oil system requirements. In this regard, it is noted that the hydraulic system filtration requirements are more stringent than those for the lift oil system. In case of flow obstruction at the filter 22, an overpressurization relief valve 26 is provided upstream of the filter 22. A drain valve 24 is also provided, e.g. downstream of the filter 22, for draining oil from the lines in anticipation of system maintenance.

Isolation valve 28 allows this pump circuit 12 to be secured for maintenance while the other pump circuit 14 is in operation, as detailed hereinbelow. Downstream from valve 28, the flow line 30 branches so that oil is supplied to the hydraulic system, via flow line 32, and, when needed, to the lift system, via valve 34. In the illustrated example, valve 34 is a solenoid operated valve for lift isolation, but another valve, such a piloted valve may be provided therefor. On route to the hydraulic system, the pump discharge pressure is reduced in flow line 32 from the higher lift oil pressure to the lower hydraulic oil system pressure requirements, through pressure regulating/reducing valve 36. Downstream from the pressure reducing valve 36, sudden changes in the hydraulic system demands are accommodated by hydraulic accumulator 38 and relief valve 40 will relieve excess pressure in case of overpressurization.

As can be seen, the redundant section 14 of the system 10 mirrors the primary section 12 by providing pump inlet line 118, variable volume pump 120, oil filter 122, drain valve 124, pressure relief valve 126, isolation, valve 128, flow lines 130 and 132, and pressure regulating/reducing valve 136, for collective use in lieu of the corresponding components of the primary system 12.

At gas turbine start-up, then, the variable volume hydraulic pump 20, set at lift oil discharge pressure, is started and the lift oil solenoid operated (or piloted) valve 34 is opened to provide high pressure lift oil to the lift orifices. Simultaneously, some of the flow is routed via line 32 to the hydraulic system to position the inlet guide vanes and gas valves. As noted above, the pump discharge pressure is reduced from the lift oil discharge pressure down to the hydraulic system requirements by pressure reducing valve 36, while any sudden changes in hydraulic system demands are accommodated by the hydraulic accumulator 38.

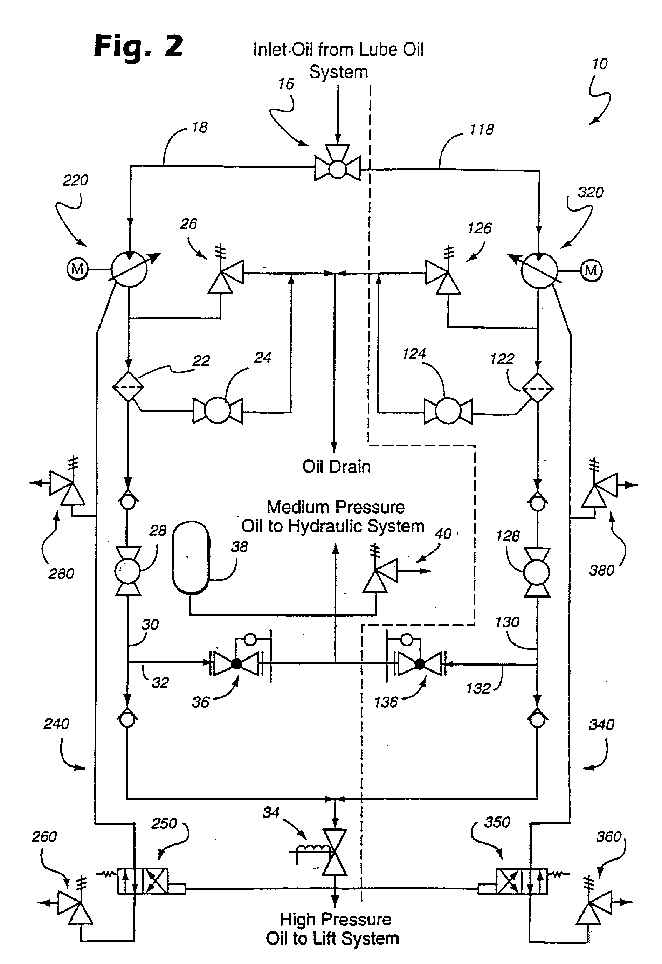

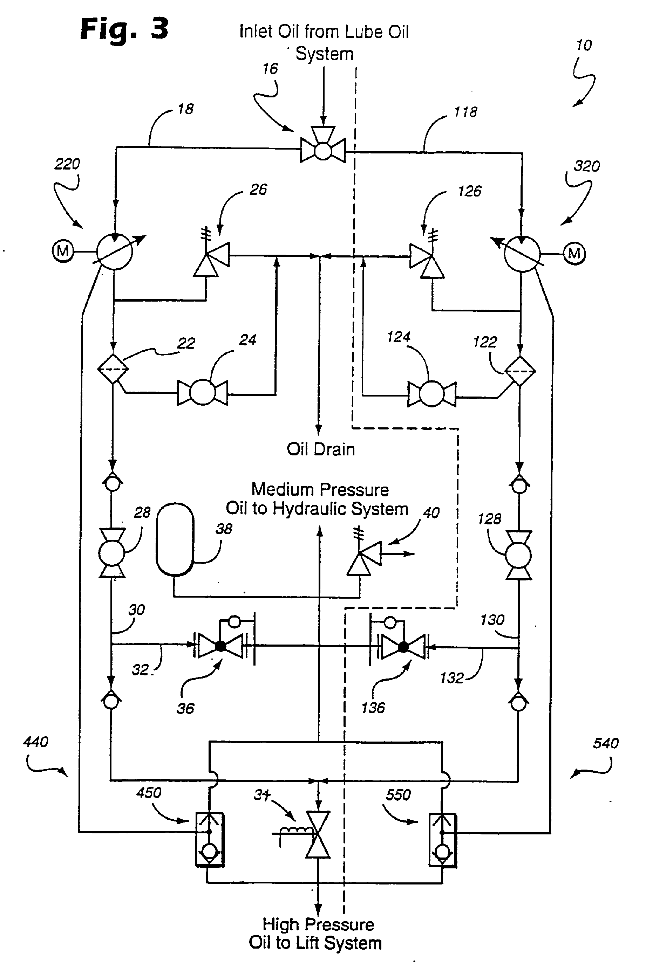

Whenever the gas turbine is above 1 % speed, the lift oil is not required. Therefore, during such steady-state gas turbine operation, the lift oil solenoid operated (or piloted) valve 34 is closed and the system will thus provide hydraulic oil requirements only. As described below with reference to FIGURES 2 and 3, in order to reduce the energy loss across the hydraulic system pressure reducing valve 36 during turbine steady-state operation, the variable volume pump 20 may be dual compensated. This means that the pump discharge pressure may be set to the system demands such that when the high pressure lift oil is not required, the pump will drop its discharge pressure to that required by the hydraulic oil system. There are industry standard methods of accomplishing the required pump dual compensation through the use of system hydraulic feedback circuits. Two presently preferred methods are discussed below with reference to the embodiments of FIGURES 2 and 3. With these embodiments, when it is sensed that lift oil is no longer required, the pump discharge pressure reduces to that required by the hydraulic system and when lift oil is again required, the pump returns to the high pressure discharge setting.

When the gas turbine drops to below 1 % speed during gas turbine shut-down, the lift oil solenoid operated (or piloted) valve 34 will open again. Simultaneously, some of the flow will continue to be routed to the hydraulic system via line 32 and the pressure reducing valve 36 to position the inlet guide vanes and gas valves.

As is apparent from the foregoing, system discharge pressure is regulated by the high pressure pump 20 being set for the lift oil system and by the hydraulic system pressure reducing valve 36 for the hydraulic system. Thus, no matter what, the pump discharge pressure, the actual hydraulic system pressure is set by the hydraulic system reducing valve 36.

As illustrated, all redundant system features are provided in a secondary loop 14 so that component failures in a failed system loop are compensated for by the backup loop taking over system output requirements automatically through the controls logic.

As noted above, it is not required that the variable volume pumps 20, 120, be dual compensated for the combined lift/hydraulic system of the invention to function. However, providing for dual compensation reduces energy loss across the hydraulic system pressure reducing valve during turbine steady-state operation and thus is incorporated in the presently preferred embodiments of the invention. The particular manner in which dual pump compensation is accomplished, however, is not critical and there are a variety of industry standard methods of accomplishing the required pump dual compensation through the use of system hydraulic feedback circuits. Both of the presently preferred embodiments are load sensing in that they use a hydraulic feedback loop to sense when the lift oil demand exists and the operational pump then aligns to the high pressure discharge setting. When the feedback loop senses that lift oil is not required, the pump switches to the medium pressure selling.

Two different mechanisms for sensing oil lift demands are illustrated, respectively, in FIGURES 2 and 3. In the embodiment illustrated in FIGURE 2, pilot actuated valves 250, 350 are provided. In the embodiment of FIGURE 3, shuttle check valves 450, 550 are utilized. As noted, a variety of other ways of accomplishing this feedback exists including, for example, the use of another electrically actuated solenoid valve.

Referring to FIGURE 2, feedback lines 240, 340 extend respectively from pilot actuated valves 250 and 350 to dual compensated variable volume pumps 220, 320 for feedback controlling the pump in the operational system to high pressure supply when there is lift oil demand and otherwise feedback controlling the pump to medium pressure supply as required by the hydraulic system during steady-state operation. In the illustrated embodiment compensators 260, 360 set at 112.5kg/cm² (1600psi) and a compensators 280, 380 set at 263.7kg/cm² (3750psi), for example, are incorporated in the feedback loops 240, 340.

Referring to FIGURE 3, shuttle valves 450 and 550 are in flow communication with the output of valve 34 and with the outputs of pressure reducing valves 36, 136, respectively. Feedback lines 440, 540 thus extend respectively from shuttle valves 450 and 550 to dual compensated variable volume pumps 220, 320 for feedback controlling the pump in the operational system to high pressure supply when there is lift oil demand or to medium pressure supply, as required by the hydraulic system during steady-state operation.

In summary and as is apparent from the foregoing, the combined system of the invention provides numerous advantages over conventional systems. Indeed, the combined system reduces the overall number of pumps and components used to accomplish the same lift oil and hydraulic oil demands. For example, the oil pumps and filters of the conventional hydraulic system have been replaced by the use of a pressure regulating valve and solenoid actuated lift isolation valve. Moreover, the provision of a 100% capacity backup pump and flow lines increases standard lift oil system reliability. Finally, in spite of its redundancy the system is more compact and requires less deckspace than the two separate systems presently required.

## Claims

1. A combined lift and hydraulic fluid supply system (10) for a gas turbine comprising:
a first pump (20), (220) for receiving hydraulic fluid from a lubricating fluid system and selectively supplying hydraulic fluid at a first pressure, said first pressure being a pressure sufficiently high for lift system requirements for a gas turbine;
a first valve (34) for selectively supplying hydraulic fluid at the first pressure to a lift system for a gas turbine;
a first fluid flow line (30) for conducting hydraulic fluid from said first pump (20), (220) to said first valve (34);
a second flow line (32) in flow communication with said first flow line (30) for receiving at least portion of the fluid pumped by said pump (20), (220) for supply to a hydraulic system for the gas turbine; and
a first pressure regulating valve (36) in said second flow line (32) for reducing a pressure of the fluid flowing therethrough from said first pressure to a lower, second pressure for gas turbine hydraulic system requirements.

2. A combined lift and hydraulic fluid supply system as claimed in claim 1, further comprising a filter (22) for filtering fluid pumped by said first pump (20), (220).

3. A combined lift and hydraulic fluid supply system as claimed in claim 2, wherein upstream of said filter (22) and downstream of said first pump (20), (220), said first flow line (20), (220) is in flow communication with a pressure relief valve (26).

4. A combined lift and hydraulic fluid supply system as claimed in claim 1, 2 or 3, wherein downstream of said first pressure regulating valve (36), said second flow line (32) is in flow communication with an accumulator (38) and a pressure relief valve (40).

5. A combined lift and hydraulic fluid supply system as claimed in any preceding claim, further comprising:
a second pump (120), (320) for selectively receiving hydraulic fluid from the lubricating fluid system and selectively supplying hydraulic fluid at said first pressure;
a third fluid flow line (130) for conducting hydraulic fluid from said second pump (120), (320) to said first valve (34);
a fourth flow line (132) for receiving at least portion of the fluid pumped by said second pump (120), (320) for supply to the hydraulic system for the gas turbine; and
an inlet valve (16) for selectively directing fluid from said lubricating fluid system to at least one of said first (20), (220) and second (120), (320) pumps.

6. A combined lift and hydraulic fluid supply system as claimed in claim 5, wherein said fourth flow line (132) is in flow communication with said second flow line (32) downstream from said first pressure reducing valve (36), and further comprising a second pressure reducing valve (136) in said fourth flow line (132), upstream of a locus of said communication with said second flow line (32), for reducing a pressure of the fluid flowing therethrough from said first pressure to said second pressure for gas turbine hydraulic system requirements.

7. A combined lift and hydraulic fluid supply system as claimed in claim 5 or 6, further comprising a filter (122) for filtering fluid flowing through said third fluid flow line (130).

8. A combined lift and hydraulic system as claimed in any preceding claim, wherein said first pump is a dual compensated variable volume pump (220) and further comprising a operative connection (240), (440) between said first pump (220) and an output of said first valve (34) whereby a discharge pressure of said first pump (220) is feedback controlled in accordance with lift system requirements downstream of said first valve (34).

9. A combined lift and hydraulic system as claimed in claim 8, wherein said operative connection comprises a hydraulic feedback loop (240) operatively coupled to said first valve output and to said first pump, said feedback loop including a pilot valve (250).

10. A combined lift and hydraulic system as claimed in claim 8, wherein said operative connection comprises a hydraulic feedback loop (440) including a shuttle valve (450) operatively coupled to said first valve (34) output and to an output of said first pressure regulating valve (36), and to said first pump (220).

11. A method for supplying lift and hydraulic fluid for a gas turbine comprising:
pumping hydraulic fluid with a first pump (20), (220) at a first pressure through a first flow line (30), said first pressure being a pressure sufficiently high for lift system requirements for a gas turbine;
selectively supplying hydraulic fluid at said first pressure from said first flow line (30) to a lift system for a gas turbine through a first valve (34);
directing at least portion of the fluid pumped by said first pump (20), (220) from said first flow line (30) into a second flow line (32) for supply to a hydraulic system for the gas turbine; and
reducing a pressure (36) of the fluid flowing through said second flow line (32) from said first pressure to a lower, second pressure for gas turbine hydraulic system requirements.

12. A method as in claim 11, wherein said reducing step comprises reducing the pressure of the fluid flowing through said second flow line (32) with a pressure reducing valve (36).

13. A method as in claim 11 or 12, further comprising filtering (22) fluid pumped by said first pump (20), (220).

14. A method as in claim 11, 12 or 13 further comprising:
providing a second pump (120), (320); and
selectively pumping hydraulic fluid with said second pump (120), (320) at said first pressure through a third flow line (130) for supplying lift system requirements for the gas turbine;
directing at least portion of the fluid pumped by said second pump (120), (320) from said third flow line (130) into a fourth flow line (132) for supply to the hydraulic system for the gas turbine; and
reducing a pressure (136) of the fluid flowing through said fourth flow line from said first pressure to the second pressure for gas turbine hydraulic system requirements.

## Patentansprüche

1. Kombiniertes Anhub- und Hydraulikfluid-Zuführungssystem (10) für eine Gasturbine, aufweisend:
eine erste Pumpe (20), (220) zum Aufnehmen von Hydraulikfluid aus einem Schmierfluidsystem und zum selektiven Zuführen von Hydraulikfluid bei einem ersten Druck, wobei der erste Druck ausreichend hoch für Anforderungen eines Anhubsystems für eine Gasturbine ist;
ein erstes Ventil (34) zum selektiven Zuführen von Hydraulikfluid bei dem ersten Druck zu einem Anhubsystem für eine Gasturbine;
eine erste Fluiddurchflussleitung (30) zum Leiten von Hydraulikfluid von der ersten Pumpe (20), (220) zu dem ersten Ventil (34);
eine zweite Durchflussleitung (32) in Durchflussverbindung mit der ersten Durchflussleitung (30) zum Aufnehmen wenigstens eines Teils des von der Pumpe (20), (220) gepumpten Fluids zum Zuführen zu einem Hydrauliksystem für die Gasturbine; und
ein erstes Druckregelungsventil (36) in der zweiten Durchflussleitung (32) zum Verringern eines Druckes des dadurch hindurchfließenden Fluids von dem ersten Druck auf einen niedrigeren zweiten Druck für Anforderungen des Gasturbinenhydrauliksystems.

2. Kombiniertes Anhub- und Hydraulikfluid-Zuführungssystem nach Anspruch 1, das ferner ein Filter (22) zum Filtern von der ersten Pumpe (20), (220) gepumpten Fluids aufweist.

3. Kombiniertes Anhub- und Hydraulikfluid-Zuführungssystem nach Anspruch 2, wobei stromaufwärts von dem Filter (22) und stromabwärts von der ersten Pumpe (20), (220) die erste Durchflussleitung (20, 220) mit einem Druckentlastungsventil (26) in Durchflussverbindung steht.

4. Kombiniertes Anhub- und Hydraulikfluid-Zuführungssystem nach Anspruch 1, 2 oder 3, wobei stromabwärts von dem ersten Druckregelungsventil (36) die zweite Durchflussleitung (32) mit einem Druckspeicher (38) und einem Druckentlastungsventil (40) in Durchflussverbindung steht.

5. Kombiniertes Anhub- und Hydraulikfluid-Zuführungssystem nach einem der vorstehenden Ansprüche, ferner aufweisend:
eine zweite Pumpe (120), (320) zum selektiven Aufnehmen von Hydraulikfluid aus dem Schmierfluidsystem und zum selektiven Zuführen von Hydraulikfluid bei einem ersten Druck;
eine dritte Fluiddurchflussleitung (130) zum Leiten von Hydraulikfluid aus der zweiten Pumpe (120), (320) zu dem ersten Ventil (34);
eine vierte Durchflussleitung (132) zum Aufnehmen wenigstens eines Teils des von der zweiten Pumpe (120), (320) gepumpten Fluids zum Zuführen zu dem Hydrauliksystem für die Gasturbine; und
ein Einlassventil (16) zum selektiven Lenken von Fluid aus dem Schmierfluidsystem an wenigstens eine von der ersten (20), (220) und der zweiten (120), (320) Pumpe.

6. Kombiniertes Anhub- und Hydraulikfluid-Zuführungssystem nach Anspruch 5, wobei die vierte Durchflussleitung (132) mit der zweiten Durchflussleitung (32) stromabwärts von dem ersten Druckreduzierungsventil (36) in Durchflussverbindung steht, und ferner ein zweites Druckreduzierungsventil (136) in der vierten Durchflussleitung (132) stromaufwärts vor einem Ort der Verbindung mit der zweiten Durchflussleitung (32) aufweist, um einen Druck des dadurch fließenden Fluids von dem ersten Druck auf einen zweiten Druck für Anforderungen eines Gasturbinenhydrauliksystems zu reduzieren.

7. Kombiniertes Anhub- und Hydraulikfluid-Zuführungssystem nach Anspruch 5 oder 6, das ferner ein Filter (122) zum Filtern von durch die dritte Fluiddurchflussleitung (130) hindurchfließendem Fluid aufweist.

8. Kombiniertes Anhub- und Hydraulikfluid-Zuführungssystem nach einem der vorstehenden Ansprüche, wobei die erste Pumpe eine doppelt kompensierte Pumpe (220) mit variablem Volumen ist, und ferner eine Funktionsverbindung (240), (440) zwischen der ersten Pumpe (220) und einem Ausgang des ersten Ventils (34) aufweist, wodurch ein Ausgabedruck der ersten Pumpe (220) gemäß Anforderungen des Anhubsystems stromabwärts von dem ersten Ventil (34) durch Rückkopplung gesteuert wird.

9. Kombiniertes Anhub- und Hydraulikfluid-Zuführungssystem nach Anspruch 8, wobei die Funktionsverbindung eine Hydraulikrückkopplungsschleife (240) aufweist, die funktionell mit dem Ausgang des ersten Ventils und mit der ersten Pumpe verbunden ist, wobei die Rückkopplungsschleife ein Vorsteuerventil (250) enthält.

10. Kombiniertes Anhub- und Hydraulikfluid-Zuführungssystem nach Anspruch 8, wobei die Funktionsverbindung eine hydraulische Rückkopplungsschleife (440) aufweist, die ein Wechselventil (450) aufweist, das funktionell mit dem Ausgang des ersten Ventils (34) und einem Ausgang des ersten Druckregelventils (36) und mit der ersten Pumpe (220) verbunden ist.

11. Verfahren zum Zuführen von Anhub- und Hydraulikfluid für eine Gasturbine, mit den Schritten:
Pumpen von Hydraulikfluid mit einer ersten Pumpe (20), (220) bei einem ersten Druck durch eine erste Durchflussleitung (30), wobei der erste Druck für Anforderungen eines Anhubsystems für eine Gasturbine ausreichend hoher Druck ist;
selektives Zuführen von Hydraulikfluid bei dem ersten Druck aus der ersten Durchflussleitung (30) zu einem Anhubsystem für eine Gasturbine durch ein erstes Ventil (34);
Lenken wenigstens eines Teils des von der ersten Pumpe (20), (220) gepumpten Fluids von der ersten Durchflussleitung (30) in eine zweite Durchflussleitung (32) zum Zuführen zu einem Hydrauliksystem für die Gasturbine; und
Reduzieren eines Druckes (36) des durch die zweite Durchflussleitung (32) hindurchfließenden Fluids von dem ersten Druck auf einen niedrigeren, zweiten Druck für Anforderungen des Gasturbinenhydrauliksystems.

12. Verfahren nach Anspruch 11, wobei der Reduzierungsschritt den Schritt der Reduzierung des Drucks des durch die zweite Durchflussleitung (32) fließenden Fluids mit einem Druckreduzierungsventil (36) aufweist.

13. Verfahren nach Anspruch 11 oder 12, ferner mit dem Schritt der Filterung (22) des von der ersten Pumpe (20), (220) gepumpten Fluids.

14. Verfahren nach Anspruch 11, 12 oder 13, ferner mit den Schritten:
Bereitstellen einer zweiten Pumpe (120), (320); und
selektives Pumpen von Hydraulikfluid mit der zweiten Pumpe (120), (320) bei dem ersten Druck durch eine dritte Durchflussleitung (130) für Anhubsystemanforderungen für die Gasturbine;
Lenken wenigstens eines Teils des von der zweiten Pumpe (120), (320) gepumpten Fluids von der dritten Durchflussleitung (130) in die vierte Durchflussleitung (132) zum Zuführen zu dem Hydrauliksystem für die Gasturbine; und
Reduzieren eines Druckes (136) des durch die vierte Durchflussleitung hindurchfließenden Fluids von dem ersten Druck auf den zweiten Druck für Anforderungen eines Gasturbinenhydrauliksystems.

## Revendications

1. Système combiné (10) d'aspiration et d'alimentation en fluide hydraulique pour turbine à gaz, comportant :
une première pompe (20), (220) pour recevoir un fluide hydraulique d'un circuit de fluide de lubrification et fournir sélectivement un fluide hydraulique à une première pression, ladite première pression étant une pression suffisamment haute pour les besoins d'un circuit d'aspiration pour turbine à gaz ;
une première vanne (34) pour fournir sélectivement, à un circuit d'aspiration pour turbine à gaz, un fluide hydraulique à la première pression ;
une première conduite d'écoulement (30) de fluide pour acheminer un fluide hydraulique de ladite première pompe (20), (220) à ladite première vanne (34) ;
une deuxième conduite d'écoulement (32) en communication fluidique avec ladite première conduite d'écoulement (30) pour recevoir au moins une partie du fluide pompé par ladite pompe (20), (220) afin d'alimenter un circuit hydraulique pour la turbine à gaz ; et
un premier réducteur de pression (36) dans ladite deuxième conduite d'écoulement (32) pour réduire,de ladite première pression à une seconde pression, plus basse, une pression du fluide s'écoulant dans celle-ci, pour les besoins du circuit hydraulique de la turbine à gaz.

2. Système combiné d'aspiration et d'alimentation en fluide hydraulique selon la revendication 1, comportant en outre un filtre (22) pour filtrer un fluide pompé par ladite première pompe (20), (220).

3. Système combiné d'aspiration et d'alimentation en fluide hydraulique selon la revendication 2, dans lequel, en amont dudit filtre (22) et en aval de ladite première pompe (20), (220), ladite première conduite d'écoulement (30) est en communication fluidique avec une soupape de décharge (26).

4. Système combiné d'aspiration et d'alimentation en fluide hydraulique selon la revendication 1, 2 ou 3, dans lequel, en aval dudit premier réducteur de pression (36), ladite deuxième conduite d'écoulement (32) est en communication d'écoulement avec un accumulateur (38) et une soupape de décharge (40).

5. Système combiné d'aspiration et d'alimentation en fluide hydraulique selon l'une quelconque des revendications précédentes, comportant en outre :
une seconde pompe (120), (320) pour recevoir sélectivement un fluide hydraulique du circuit de fluide de lubrification et fournir sélectivement un fluide hydraulique à ladite première pression ;
une troisième conduite d'écoulement (130) de fluide pour acheminer un fluide hydraulique de ladite seconde pompe (120), (320) à ladite première vanne (34) ;
une quatrième conduite d'écoulement (132) pour recevoir au moins une partie du fluide pompé par ladite seconde pompe (120), (320) afin d'alimenter le circuit hydraulique pour la turbine à gaz ; et
une soupape d'admission (16) pour faire sélectivement passer un fluide dudit circuit de fluide de lubrification à ladite première (20), (220) et/ou ladite seconde (120), (320) pompe(s).

6. Système combiné d'aspiration et d'alimentation en fluide hydraulique selon la revendication 5, dans lequel ladite quatrième conduite d'écoulement (132) est en communication fluidique avec ladite deuxième conduite d'écoulement (32) en aval dudit premier réducteur de pression (36), et comportant en outre un second réducteur de pression (136) dans ladite quatrième conduite d'écoulement (132), en amont d'un lieu de ladite communication avec ladite deuxième conduite d'écoulement (32), pour réduire de ladite première pression à une seconde pression une pression du fluide s'écoulant dans celle-ci, pour les besoins du circuit hydraulique de turbine à gaz.

7. Système combiné d'aspiration et d'alimentation en fluide hydraulique selon la revendication 5 ou 6, comportant en outre un filtre (122) pour filtrer le fluide s'écoulant dans ladite troisième conduite d'écoulement (130) de fluide.

8. Système combiné d'aspiration et d'alimentation en fluide hydraulique selon l'une quelconque des revendications précédentes, dans lequel ladite première pompe est une pompe double compensée à cylindrée variable (220), et comportant en outre une liaison fonctionnelle (240), (440) entre ladite première pompe (220) et une sortie de ladite première vanne (34), grâce à quoi une pression de refoulement de ladite première pompe (220) est régulée en boucle fermée en fonction des besoins du circuit d'aspiration en aval de ladite première vanne (34).

9. Système combiné d'aspiration et d'alimentation en fluide hydraulique selon la revendication 8, dans lequel ladite liaison fonctionnelle comprend une boucle hydraulique fermée (240) coopérant avec ladite sortie de la première vanne et avec ladite première pompe, ladite boucle fermée comprenant une soupape pilote (250).

10. Système combiné d'aspiration et d'alimentation en fluide hydraulique selon la revendication 8, dans lequel ladite liaison fonctionnelle comprend une boucle hydraulique fermée (440) comprenant une soupape à va-et-vient (450) coopérant avec la sortie de ladite première vanne (34) et avec une sortie dudit premier réducteur de pression (36), ainsi qu'avec ladite première pompe (220).

11. Procédé pour fournir un fluide aspiré et un fluide de circuit hydraulique pour turbine à gaz, comportant :
le pompage de fluide hydraulique à l'aide d'une première pompe (20), (220) à une première pression, à l'aide d'une première conduite d'écoulement (30), ladite première pression étant une pression suffisamment haute pour les besoins d'un circuit d'aspiration pour turbine à gaz ;
la fourniture sélective de fluide hydraulique, à ladite première pression, de ladite première conduite d'écoulement (30) à un circuit d'aspiration pour turbine à gaz via une première vanne (34),
le guidage d'au moins une partie du fluide pompé par la ladite première pompe (20), (220),depuis ladite première conduite d'écoulement (30) jusque dans une deuxième conduite d'écoulement (32), afin d'alimenter un circuit hydraulique pour la turbine à gaz ; et
la réduction de ladite première pression à une seconde pression, plus basse, d'une pression (36) du fluide s'écoulant dans ladite deuxième conduite d'écoulement(32), pour les besoins du circuit hydraulique de la turbine à gaz.

12. Procédé selon la revendication 11, dans lequel ladite étape de réduction comprend la réduction, à l'aide d'un réducteur (36) de pression, de la pression du fluide s'écoulant dans ladite deuxième conduite d'écoulement (32).

13. Procédé selon la revendication 11 ou 12, comportant en outre le filtrage (22) du fluide pompé par ladite première pompe (20), (220).

14. Procédé selon la revendication 11, 12 ou 13, comportant en outre :
l'installation d'une seconde pompe (120), (320) ; et
le pompage sélectif de fluide hydraulique au moyen de ladite deuxième pompe (120), (320), à ladite première pression, à l'aide d'une troisième conduite d'écoulement (130), afin de répondre aux besoins du circuit d'aspiration pour la turbine à gaz ;
le guidage d'au moins une partie du fluide pompé par ladite seconde pompe (120), (320),depuis ladite troisième conduite d'écoulement (130) jusque dans une quatrième conduite d'écoulement (132), afin d'alimenter le circuit hydraulique pour la turbine à gaz ; et
la réduction, de ladite première pression à la seconde pression, d'une pression (136) du fluide s'écoulant dans ladite quatrième conduite d'écoulement, pour les besoins du circuit hydraulique de la turbine à gaz.
